# EUROPEAN PATENT APPLICATION

(11) **EP 3 730 210 A1**
(43) Date of publication of application: **28.10.2020**
(21) Application number: 19171394.0
(22) Date of filing: 26.04.2019
(51) Int. Cl.: B01J 23/22, B01D 53/94, B01J 35/02, B01J 37/00, B01J 37/02

(54) **CATALYST CERAMIC CANDLE FILTER FOR COMBINED PARTICULATE REMOVAL AND THE SELECTIVE CATALYTIC REDUCTION (SCR) OF NITROGEN-OXIDES**

(71) Applicant: UMICORE AG & CO. KG, 63457 Hanau-Wolfgang (DE)
(72) Inventor: PEDERSEN, Kim Hougaard, 2830 Virum (DK); THØGERSEN, Joakim Reimer, 2830 Virum (DK); PEDERSEN, Anders Hjordt, 2100 Kopenhagen (DK)

(57) **Abstract**

The present invention pertains to a catalyst for use in the selective catalytic reduction (SCR) of nitrogen oxides comprising
• a ceramic candle filter substrate and
• a coating which comprises an oxidic metal carrier comprising an oxide of titanium and a catalytic metal oxide which comprises an oxide of vanadium wherein the mass ratio vanadium/titanium is 0.03 to 0.27,
• wherein the mass ratio is calculated based on the mass of vanadium metal and titanium metal, and
• wherein the catalyst comprises from about 1 to about 10 % by weight of the catalytically active material, and
• wherein the catalytic metal oxide is adsorbed onto the surface of the oxidic metal carrier.

## Description

The present invention relates to a catalyst for use in the selective catalytic reduction (SCR) of nitrogen oxides by reaction with ammonia. It in addition relates to a method for the preparation of such catalyst, which is in particular based on the use of an impregnation liquid comprising one or more catalyst metal precursor compounds dispersed on nanoparticles of an oxidic metal carrier. The catalyst may advantageously be applied to a ceramic candle filter.

Catalysts, in particular if applied to ceramic candle filters, are useful in treatment of process gases by heterogeneous catalysis and are widely used in emission control devices in the glass industry but are also investigated to be used in treating off-gasses from other industries. Catalytic ceramic filters for the removal of dust and particulate matter in a process off-gas are well-known. Catalytic ceramic filters are in particular useful in the cleaning of process gas or raw gas from industrial processes involving combustion, like the production of minerals, glass, cement, waste incineration, or from biomass power plants, and optionally coal fired boilers and engines. Ceramic filters in the shape of filter candles are used in many industries for removal of particulate matter from process gases. They constitute one of the most efficient types of dust collectors available, and they can achieve collection efficiencies of more than 99% for particulates. The filters can be made from various ceramic materials which comprise ceramic fibres made of alkali and alkaline earth silicates or alumino silicates.
Typical operation temperatures are within 180-400°C and one single installation may contain several thousand filters.
The present invention provides a novel catalysts to be applied on such ceramic candle filters. Ceramic candle filters impregnated with the catalyst according to the present invention provide both a filter function for particulate matter and an SCR function.

One way of making it is that the catalytic active material is supported in the substrate by applying a carrier, typically a layer comprising at least one inorganic base metal oxide, which is deposited on the catalyst substrate. Suitable inorganic base metal oxides are, for instance, TiO₂, SiO₂, Al₂O₃, CeO₂, ZrO₂, La₂O₃ and mixtures and combinations thereof. Such carrier materials are well known to the skilled person and can be applied in the present invention without departing from the scope of the claims. The carrier provides a porous, high surface area layer bonded to the surface of the substrate after drying, and optionally calcining in air on in a controlled atmosphere.
The catalytic active material or precursors thereof can be deposited on the carrier before impregnating the substrate and finally, the thus catalyzed substrate is activated by calcination at elevated temperatures either in a production process or when installed.
In the present invention, the substrate preferably is a ceramic candle filter.

When operating SCR catalysts in the removal of nitrogen oxides (NOx), the nitrogen oxides are converted to free nitrogen with a reducing agent, usually ammonia, in the presence of the catalyst supported on or within pores in the walls of the monolithic substrate by selective catalytic reduction according to reactions I and II:

4 NO + 4 NH₃ + O₂ → 4 N₂ + 6 H₂O I

NO + NO₂ + 2 NH₃ → 2 N₂ + 3 H₂O II

Catalyst compounds active in the SCR reaction with ammonia are per se known in the art. To name a few, typically employed catalysts are vanadium oxide, tungsten oxide and zeolitic materials, usually exchanged with for example copper and/or iron, either used alone or as mixtures thereof. The most commonly used catalyst for the reduction of NOx from off-gas is titania-supported vanadium oxide, optionally promoted with tungsten oxide, molybdenum oxide or antimony oxide.

WO 2016/058713 A1 discloses a method for preparing a catalyzed fabric filter which comprises impregnating the fabric filter substrate with an aqueous impregnation liquid comprising an aqueous hydrosol of one or more catalyst metal precursor compounds dispersed on nanoparticles of an oxidic metal carrier.

According to the disclosure of WO 2016/058713 A1 (see method of Example 1) a NH₄VO₃/TiO₂ ratio of 0.58 is used which corresponds to a V/Ti ratio of 0.42.

WO 2016/150464 A1 discloses a catalyzed ceramic candle filter and the use of said filter for the removal of or particulate matter in the form of soot, ash, metals and metal compounds, together with hydrocarbons and nitrogen oxides being present in the process off-gas or engine exhaust gas. The filter comprises a combined SCR and oxidation catalyst. The catalytically active species are vanadium oxide, titania and palladium. The vanadium oxide is preferably vanadium pentoxide. Palladium is preferably present in an amount of between 20 and 1000 ppm/weight of the filter. Vanadium oxide on titania acts as a combined SCR and oxidation catalyst, and Pd acts as an oxidation catalyst.
However, WO 2016/150464 A1 is silent about the total amounts of vanadium oxide and titania, and there is no information about a suitable range of the vanadium to titanium ratio. The disclosure comprises two examples. Example 1 refers to a ceramic candle filter that is coated with 1.26 wt.-% vanadium and 2.36 wt.-% Ti, which is a V:Ti ratio of about 1:2. Example 2 demonstrates the CO oxidation performance of the catalyst of Example 1. There is no information about the dry mass of the washcoat or the solvents and additives used.
WO 2016/150465 A1 also discloses a catalyzed ceramic candle filter and the use of said filter for the removal of or particulate matter together with hydrocarbons and nitrogen oxides. The catalytically active species are also vanadium oxide, titania and palladium.
In WO 2016/150464 A1, a combined SCR and oxidation catalyst is arranged at least on the dispersion side and/or within the wall of the filter, and a palladium comprising catalyst is arranged on the permeation side of the filter.

The combined SCR and oxidation catalyst preferably comprises a vanadium oxide and titania, and the palladium catalyst may optionally also comprise a vanadium oxide and titania.
By contrast, the ceramic candle filter according to WO 2016/150465 A1 comprises a combined SCR and oxidation catalyst arranged at least on the dispersion side and/or within the wall of filter, and this combined SCR and oxidation catalyst comprises palladium, a vanadium oxide and titania.
Thus, the difference between WO 2016/150464 A1 and WO 2016/150465 A1 is that the former does not comprise palladium in the combined SCR and oxidation catalyst, whereas the latter does.
The terms "dispersion side" and "permeate side" refer to the flow side of the filter facing the unfiltered exhaust gas and to flow side facing the filtered off or exhaust gas, respectively.

WO 2017/055344 A1 discloses a catalyst-containing ceramic dust filter for off-gas or exhaust gas cleaning. It comprises at least one catalytically active metal and an oxide support to form a catalytically active metal oxide support. Preferably, the at least one catalytically active metal comprises a combined SCR and oxidation catalyst and a precious metal comprising catalyst. The combined SCR and oxidation catalyst preferably comprises an oxide of vanadium, tungsten or molybdenum and titania, and the precious metal comprising catalyst is preferably a palladium catalyst. Most preferably, the combined SCR and oxidation catalyst comprises a vanadium oxide and titania. Palladium shall be present in an amount of between 20 and 1.000 ppm/weight of the filter. WO 2017/055344 a1 is, however, silent about a preferred V/Ti ratio or about the total amount of catalytically active material in the washcoat or on the filter.

In R Barthos, A Hegyessy, G Novodarzski, Z Paszti and J Valyon: "Structure and activity of Pd/V2O5/TiO2 catalysts in Wacker oxidation of ethylene", Appl Catal A 2017, 531, 96-105, the catalytic activity of Pd/V₂O₅/TiO₂ catalysts with different Pd, Ti, and V amounts was investigated. The V₂O₅/TiO₂ preparations comprised 2.2 or 4.6 or 8.6 wt.-% vanadium, respectively.

The deposition of vanadium and vanadium compounds on titania is well known in the art. It is, for instance, described in K Bourikas, I Georgiadou, C Kordulis and A Lycourghiotis: "Mechanism of deposition of vanadium-oxo species on the "anatase/electrolytic solution" interface, J Phys Chem B 1997, 101, 8499-8506. In this scientific article, the authors show the deposition through adsorption reaction of vanadium-oxo species at relatively low and relatively high pH values on sites created by single TiOH₂⁺ or TiOH groups, respectively.

US 2014/0271435 A1 discloses a catalysed filter body of bio-soluble fibres catalysed with a catalyst comprising oxides of vanadium and titanium, wherein the total concentration of alkali metals in the filter body is less than 3000 ppm by weight and/or the total concentration of earth alkali metals in the filter body is less than 20% by weight. However, US 2014/0271435 A1 is silent about the amount of washcoat to be applied, the amounts of vanadium and titanium in said washcoat, and the ratio of vanadium to titanium.

WO 2018/018406 A1 discloses a supported catalyst for NOx removal, a monolithic selective catalytic reduction (SCR) catalyst, a preparation method thereof, and a method for NOx removal. The supported catalyst comprises a support and catalytically active components supported on the support, which comprise vanadium, antimony and at least one further component selected from the group consisting of silicon, aluminium and zirconium. Preferably, vanadium is contained in an amount of 1 to 10% by weight, calculated as V₂O₅, antimony is contained in an amount of 1 to 20% by weight, calculated as Sb₂O₃, and the at least one further component is contained in an amount of 0.5 to 20% by weight, calculated as SiO₂, Al₂O₃ or ZrO₂, respectively.

The inventors of the present invention now have surprisingly found that this ratio can be decreased, i.e. less vanadium can be used, without effecting the DeNOx activity of the catalyst. At the same time, SO₂ oxidation is reduced which subsequently will lead to less formation of ammonium bisulphate (ABS).

Accordingly, the present invention pertains to a catalyst for use in the selective catalytic reduction (SCR) of nitrogen oxides comprising
- a ceramic candle filter substrate and
- a coating which comprises an oxidic metal carrier comprising an oxide of titanium and a catalytic metal oxide which comprises an oxide of vanadium wherein the mass ratio vanadium/titanium is 0.03 to 0.27,
- wherein the mass ratio is calculated based on the mass of vanadium metal and titanium metal, and
- wherein the catalyst comprises from 1 to 20 % by weight of the catalytically active material, and
- wherein the catalytic metal oxide is adsorbed onto the surface of the oxidic metal carrier.

The novel catalyst for use in the selective catalytic reduction (SCR) of nitrogen oxides according to the present invention and the process for preparing said catalyst are explained below, with the invention encompassing all the embodiments indicated below, both individually and in combination with one another.

The substrate is a ceramic candle filter. As mentioned above, ceramic filters in the shape of filter candles are used in many industries for removal of particulate matter from process gases. They constitute one of the most efficient types of dust collectors available. The catalyst according to the present invention can be applied in such dust collectors. In one embodiment of the present invention, many catalysts comprising of a ceramic candle filter substrate and a coating which comprises an oxidic metal carrier comprising an oxide of titanium and a catalytic metal oxide which comprises an oxide of vanadium wherein the mass ratio vanadium/titanium is 0.03 to 0.27 are used in parallel. Such arrangements are well known to the skilled person and can be used without departing from the scope of the claims.

The catalytic metal oxide of the coating which comprises an oxide of vanadium preferably comprises vanadium pentoxide (V₂O₅). Besides it optionally comprises oxides of other metals, in particular an oxide of tungsten and/or molybdenum and/or antimony. Preferred oxides of tungsten, molybdenum and antimony, respectively, are tungsten trioxide (WO₃), molybdenum trioxide (MoO₃) and antimony pentoxide (Sb₂O₅).

The oxidic metal carrier of the coating which comprises an oxide of titanium usually comprises titanium dioxide. The titanium dioxide may be chosen from anatase, rutil, brookit and mixtures thereof. Preferably, the titanium dioxide comprises at least 95 wt.% anatase, preferably at least 98 wt.-% anatase, wherein the remainder adding up to 100 wt.-% consists of rutil, brookit, or mixtures of rutil and brookit. Besides it optionally comprises an oxide of another metal, in particular an oxide of aluminum, silicon, cerium, zirconium or mixtures, mixed oxides or compounds comprising at least one of these oxides.

Preferably, the oxidic metal carrier consists of either single or agglomerated nanoparticles of titanium dioxide with a primary particle size D₅₀ of between 1 nm and 1000 nm, preferably 20 to 200 nm, measured by a laser diffraction particle size analyzer. A primary particle is the smallest identifiable subdivision in a particulate system. Primary particles may also be subunits of aggregates.

According to the present invention the mass ratio vanadium/titanium is 0.03 to 0.27, preferably 0.7 to 0.27, and most preferably 0.12 to 0.21. For the avoidance of doubt, the mass ratio is calculated based on the mass of vanadium metal and titanium metal. Preferably, the inventive catalyst is free of platinum group metals, in particular free of palladium.
The catalytic metal oxide is adsorbed, or precipitated on the surface, or deposited through impregnation followed by drying or deposited by pH adjustment, i.e. by precipitation by changing of the pH value, onto the surface of the oxidic metal carrier.

In another embodiment of the present invention, the oxidic metal carrier not only comprises an oxide of titanium, in particular titanium dioxide, but in addition an oxide of vanadium, in particular vanadium pentoxide and optionally oxides of tungsten and/or molybdenum and/or antimony, in particular tungsten trioxide and/or molybdenum trioxide and/or antimony pentoxide.
This is in particular the case if a recycled or fresh SCR catalyst comprising vanadium pentoxide (V₂O₅) and titanium dioxide TiO₂, and optionally tungsten trioxide (WO₃) and/or molybdenum trioxide (MoO₃) and/or antimony pentoxide (Sb₂O₅) is reused.
In case the oxidic metal carrier comprises and oxide of vanadium, this oxide of vanadium has to be taken into consideration when the mass ratio of vanadium to titanium is calculated as described above.

The inventive catalyst comprises from 1 to 20 % by weight of coating, preferably 2 to 10 %. The term "catalyst" as used in the present invention comprises the ceramic candle filter substrate and the coating.

The present invention also pertains to a process for preparing a catalyst for use in the selective catalytic reduction (SCR) of nitrogen oxides comprising the steps of
a) providing a ceramic candle filter substrate
b) providing an aqueous impregnation liquid comprising one or more catalyst metal precursor compounds comprising a vanadium compound dispersed on particles of an oxidic metal carrier comprising titanium oxide;
c) impregnating the ceramic candle filter substrate with the impregnation liquid; and
d) drying and thermally activating the impregnated ceramic candle filter substrate at a temperature 150 to 600°C to convert the one or more metal precursor compounds to their catalytically active form.

As regards step b), the catalyst metal precursor compound comprising a vanadium compound is preferably ammonium metavanadate. In case the inventive catalyst comprises oxides of tungsten and/or molybdenum, the impregnation liquid preferably comprises ammonium metatungstate and/or ammonium heptamolybdate.

In some applications of the process according to the invention the ceramic candle filter substrate is pre-coated prior to the impregnation of the ceramic candle filter substrate to provide a larger surface area of the substrate. Thus, in an embodiment of the present invention, the ceramic candle filter substrate is impregnated with an oxidic metal carrier comprising oxides of titanium and optionally of aluminum, cerium, zirconium or mixtures, mixed oxides or compounds comprising at least one of these oxides, prior to impregnating the ceramic candle filter substrate with the impregnation liquid in step (c).

The thermal activation of the impregnated ceramic candle filter substrate according to step d) can be performed either before installation of the impregnated substrate or after installation of impregnated substrate in an SCR unit. Preferably, the thermal activation temperature is between 200-450°C.
The term "thermal activation" as used in the present invention means treating the one or more catalyst metal precursor compounds at a temperature suitable to convert them into their catalytically active form. The skilled persons knows which temperature range is suitable to convert one or more given catalyst metal precursor compound into their corresponding catalytically active form. He or she can apply this knowledge without departing from the scope of the claims.

In case the inventive process comprises providing a recycled catalyst in step a) which already comprises vanadium pentoxide (V₂O₅) and titanium dioxide TiO₂, and optionally tungsten trioxide (WO₃) and/or molybdenum trioxide (MoO₃), the amount of the precursor of the said oxides in the aqueous impregnation liquid can be reduced accordingly to obtain the intended amount of the respective metals in the final coating A. The skilled person can calculate the respective amounts of the metal oxide and the metal precursor, for instance the amounts of vanadium pentoxide (V₂O₅) from a recycled catalyst and the amount of ammonium metavanadate, that are necessary to achieve the intended amount of vanadium in the final impregnation liquid. The same applies for the use of titanium dioxide, tungsten trioxide, molybdenum trioxide and antimony pentoxide from a recycled catalyst on the one hand and fresh titanium dioxide, ammonium metatungstate and/or ammonium heptamolybdate and/or antimony oxalate and/or antimony acetate on the other hand, respectively. He can use this knowledge to calculate the amounts of the recycled catalyst and of the precursor compound to be used without departing from the scope of the claims

In the preparation of the aqueous impregnation liquid as disclosed in more detail below, the oxidic metal carrier is present in the impregnation solution in form of small particles, a part of which can agglomerate to a larger particle size than the preferred size.

Primary amines have shown to prevent agglomeration or to break down already formed agglomerates. It is thus preferred to add a dispersing agent to the impregnation liquid selected from one or more of primary amines. The primary amine is preferably soluble in the aqueous impregnation liquid, when having been added in an amount resulting in the above disclosed purpose. Primary amines with fewer than seven carbon atoms are water soluble, preferred primary amines for use in the invention are therefore mono-methyl amine, mono-ethyl amine, mono-propyl amine, mono-butyl amine or mixtures thereof. Of these, the most preferred dispersing agent is mono-ethyl amine.

Good results are obtained when the primary amine dispersing agent is added to the impregnation liquid in an amount resulting in a pH value of the impregnation liquid above 7, preferably pH 8.5 to 10.

As known in the art, an effective catalyst requires a monolayer coverage of the catalytically active material on an oxidic metal carrier. Formation of excess crystalline catalytically active material on the carrier should be avoided.
A high dispersion of catalytically active material after thermal activation at low temperatures is possible when employing the so-called equilibrium deposition method alone or in combination with the primary amine dispersing agent. In this method the electrostatic force of attraction between oppositely charged metal compounds is utilized to bind one metal compound on surface of the oppositely charge metal compound in finely dispersed form.

TiO₂ and VₓO_{y}^{z-} have opposite surface charges in the pH interval of 4 to 6. Hence, the electrostatic force of attraction facilitates deposition of VₓO_{y}^{z-} onto TiO₂.
The limited solubility of VₓO_{y}^{z-} is circumvented by the principle of Le Chatelier. When VₓO_{y}^{z-} binds to Ti-OH₂⁺ sites, new VₓO_{y}^{z-} ions are solubilized. This continuous process occurs at room temperature and requires nothing but stirring and pH regulation.
The skilled person knows that various vanadium oxides coexist in aqueous solutions. The suffix "x" as given above stands for the number of vanadium atoms in the vanadium-oxygen species, "y" stands for the number of oxygen atoms, and "z" represents the charge of the vanadium-oxygen species. The nature of each of these coexisting vanadium-oxygen species and the relative amount of each of these species depends on the pH value of the aqueous solution and on the voltage potential of each individual vanadium-oxygen species compared to the standard hydrogen electrode.
In electrochemistry, a Pourbaix diagram, also known as a potential/pH diagram, E_{H}-pH diagram or a pE/pH diagram, maps out possible stable (equilibrium) phases of an aqueous electrochemical system. Predominant ion boundaries are represented by lines. Pourbaix diagrams are known to the skilled person, and they are disclosed in M Pourbaix: "Atlas of Electrochemical Equilibrium in Aqueous Solutions", National Association of Corrosion Engineers, 1974, ISBN 0-915567-98-9. Furthermore, Pourbaix diagrams relating to vanadium-oxygen species are described in K Post, RG Robins: "Thermodynamic diagram for the vanadium-water system at 298.15 K", Electrochim Acta 1976, 21, 401-405, and in BM Weckhuysen, DE Keller: "Chemistry, spectroscopy ad the role of supported vanadium oxides in heterogeneous catalysis", Catal Today 2003, 78, 25-46.

Thus, the aqueous impregnation liquid is preferably prepared by the steps of
i. adding the one or more catalyst metal precursor compounds and the oxidic metal carrier to water and continuously adding an acid to the thus obtained mixture to maintain the pH of the mixture at a value where the surface charge of the one or more catalyst precursor metal compound is negative and the Zeta potential of the oxidic metal carrier is positive;
ii. adsorbing the one or more catalyst metal precursor compound onto the surface of the oxidic metal carrier; and optionally
iii. adding the dispersing agent to the thus prepared mixture in an amount to obtain a pH value above 7 of the thus prepared slurry;
iv. optionally milling the mixture.

Some commercially available oxidic metal carriers, such as commercially available TiO₂ have average particle sizes D50 of about 1 µm, for instance between 800 nm and 1200 nm. In this case, the mixture obtained by adding the one or more catalyst metal precursor compounds and the oxidic metal carrier to water is a so-called "slurry". In an embodiment of the present invention, the mixture obtained after step iii) is milled as described above in step iv).
The term "slurry" as used in the present invention refers to a heterogeneous mixture of at least one liquid and solids that are finely dispersed in said liquid. The at least one liquid is water, but it may additionally comprise other liquids such as amines, as described above. The solids of the slurry according to the present invention comprise the oxidic metal carrier the catalytic metal oxide. The oxidic metal carrier and the catalytic metal oxide are suspended or dispersed in the at least one liquid. In accordance with common definitions, a "suspension" comprises solid particles having an average particle size D50 of 1 µm to 100 µm, and a "dispersion" comprises solid particles having an average particle size D50 of 1 nm to 1 µm. A "slurry" in the sense of the present invention can thus be either a suspension or a dispersion, depending on the average particle size D50, but it always deals with a heterogeneous mixture wherein the solid particles will settle over time if left undisturbed.
If the solids, i.e. the oxidic metal carrier and the catalytic metal oxide resp. the catalyst precursor metal compound are added to water, followed by the addition of a dispersing agent, followed by adjusting the pH to a value above 7, preferably 8 to 10, followed by milling as described above, the solid particles become smaller. During milling, the mixture of water, oxides and the dispersing agent changes from a suspension or dispersion, depending on the initial average particle size D50, to a colloidal system. A colloidal system is a system in which suspended particles are smaller than those of a dispersion or suspension, and the particles do not settle over time if left undisturbed. The transition from a dispersion to a colloid depends not only on the particle size, but also on the nature of the liquid and the solid and is fluent to a certain extent. In the present invention, the mixture of water, oxides and the dispersing agent becomes colloidal if the average particle sizes D50 are in a range of 90 to 110 nm. This colloidal system behaves like a liquid solution, i.e. like a homogeneous mixture of at least one liquid and at least one solid wherein the at least one solid does not settle over time if left undisturbed. In the context of the present invention, this colloidal system is referred to as the "impregnation liquid". The impregnation liquid can be used to apply the oxidic metal carrier and the catalytical metal oxide onto the substrate.
In case the oxidic metal carriers, such as commercially available TiO₂ have average particle sizes D50 in a range of 90 nm and 110 nm, the mixture obtained by adding the one or more catalyst metal precursor compounds and the oxidic metal carrier will already be colloidal and thus a liquid solution as defined above. In this case, milling the mixture according to step iv) is not necessary.
The term "mixture" as used in steps i), ii) and iv) above thus refers to slurries and colloidal systems as defined above, depending on the average particle size D50 of the oxidic metal carriers applied in step i).

Preferably, the pH value in step (i) and (ii) is maintained at between 2.5 and 5.5.
The acid used in step a) to maintain the pH of the liquid at a value where the surface charge of the one or more catalyst precursor metal compound is negative and the Zeta potential of the oxidic metal carrier is positive is preferably chosen from nitric acid, formic acid, acetic acid, citric acid and mixtures thereof. More preferably, the acid is chosen from a mixture of nitric acid and at least one of formic acid, acetic acid and citric acid, and even more preferably, the acid is nitric acid.
In step (iv), the slurry is milled to adjust the size of the particles comprising the oxidic metal carrier and the catalytic metal precursor. In one embodiment, the average particle size D₅₀ after milling is between 1 nm and 1000 nm, preferably between 40 to 300 nm, measured by a laser diffraction particle size analyzer and/or dynamic light scattering.
Suitable mills are, for instance, bead mills and ball mills. The skilled person knows which mills are suitable to mill slurries comprising particles. He can apply said methods without departing from the scope of the claims.
The catalyst of the present invention is suitable for the treatment of off-gas from automotive and stationary sources and to selectively reduce nitrogen oxides contained in said off-gas.
Accordingly, the present invention further relates to a method for treating the off-gas from automotive and stationary sources and to selectively reduce nitrogen oxides contained in said off-gas, characterized in that the off-gas is passed over an inventive catalyst.

In embodiments of the present invention, the inventive catalyst is used for the treatment of process gases in emission control devices in the glass industry, in biomass powerplants, in waste-to-energy plants, in cement plants and other kind of plants in the chemical industry.

### Example 1

a) Preparation of an ammonium vanadate/titania containing impregnation liquid
   1. 160 kg of demineralized water is mixed with 70.4 kg TiO₂.
   2. 14.5 kg of ammonia metavanadate (AMV) is added under continuous stirring. The NH₄VO₃/TiO₂ - ratio is 0.23.
   3. The pH is monitored and increases continuously.
   4. The pH is adjusted with concentrated nitric acid in the interval of 4.0-4.5.
   5. After a few hours the pH of the liquid remains constant and the slurry is left under constant stirring for at least 5-10 hours. However, the pH needs adjustment every 3 hours.
      The resulting slurry has a yellow color and 5.58 kg ethylamine (68% in water) is added (or until pH ∼ 9.2-9.5).
      The slurry becomes pale yellow and is subsequently milled down to a particle size of 90-110 nm (D50) where it obtains liquid behavior.
   6. The liquid is diluted with 575 L of a 0,12% Ethylamine solution to a dry matter of approximately 9 wt%.
   7. Optionally adding a rheology modifier and/or surface tension modifier to alter liquid properties
   Suitable rheology modifiers are non-ionic or ionic dispersion agents or thickeners. The dispersion agents can be selected from polymers and polyelectrolytes with molecular weights from 2,000 up to 100,000. Typical functional groups for these dispersants include hydroxyl (-OH), carboxyl (-COOH), sulfonate (-SO₃H), sulfate (-OSO₃-), ammonium (-NH₄⁺), amino (-NH₂), imino (-NH-) and polyoxyethylene (-CH₂CH₂O-) groups.
   Suitable surfactants can also be non-ionic or ionic. Anionic surfactants are, for instance, sulfates, sulfonates, carboxylates and phosphate esters. Cationic surfactants are primary, secondary, or tertiary amines, depending on the pH value, and quaternary organic ammonium salts. Non-ionic surfactants can be chosen from:
   - Ethoxylates: fatty alcohol ethoxylates, alkylphenol ethoxylates (APEs), fatty acid ethoxylates, ethoxylated fatty esters and oils, ethoxylated amines and/or fatty acid amides, terminally blocked ethoxylates
   - Fatty acid esters of polyhydroxy compounds: fatty acid esters of glycerol, fatty acid esters of sorbitol, fatty acid esters of sucrose, alkyl polyglucosides,
   - Amine oxides
   - Sulfoxides
   - Phosphine oxides
   It is obvious from the above list that some substances listed above can act both as a rheology modifier and as a surface tension modifier. This is well known to the skilled person.
b) A ceramic candle filter substrate is impregnated with the aqueous impregnation liquid. The V/Ti ratio of the catalyst thus obtained is 0.17.

### Example 2

The method of Example 1 was repeated with the exception that the catalyst obtained has a V/Ti ratio of 0.12

### Example 3

The method of Example 1 was repeated with the exception that the catalyst obtained has a V/Ti ratio of 0.21

### Example 4

The method of Example 1 was repeated with the exception that the catalyst obtained has a V/Ti ratio of 0.24

### Example 5

The method of Example 1 was repeated with the exception that the catalyst obtained has a V/Ti ratio of 0.27

### Tests

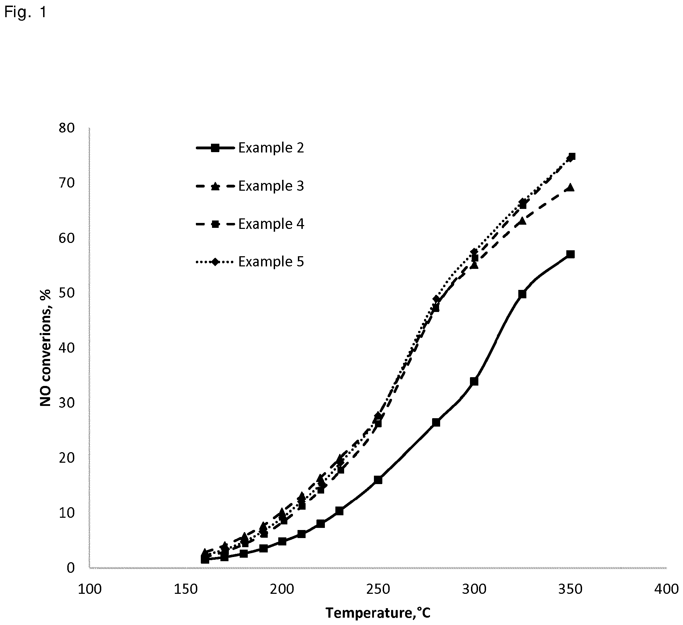

A part of each of the aqueous slurries obtained according to Examples 2 to 5 was dried and the powders thus obtained were tested in the ammonia SCR of NO with a gas composition containing 500 ppm NO, 533 ppm NH₃, 10 vol% O₂, 4% H₂O and balance N₂. The results of the tests are summarized in Table 1 below and shown in Fig. 1.

**Table 1: NOx conversion of Examples 2 to 5 at various temperatures**

| | X NO [%] | | | |
|---|---|---|---|---|
| T [°C] | Example 2 | Example 3 | Example 4 | Example 5 |
| 350 | 57 | 69 | 75 | 74 |
| 325 | 50 | 63 | 66 | 67 |
| 300 | 34 | 55 | 56 | 57 |
| 280 | 26 | 48 | 47 | 49 |
| 250 | 16 | 28 | 26 | 28 |
| 230 | 10 | 20 | 18 | 19 |
| 220 | 8 | 16 | 14 | 15 |
| 210 | 6 | 13 | 11 | 12 |
| 200 | 5 | 10 | 9 | 9 |
| 190 | 4 | 8 | 6 | 7 |
| 180 | 3 | 6 | 4 | 5 |
| 170 | 2 | 4 | 3 | 3 |
| 160 | 2 | 3 | 2 | 2 |

| | | | | |
|---|---|---|---|---|
| X NO [%] = NOx conversion in percent | | | | |

As is apparent from Figure 1, the powders corresponding to the catalysts of Examples 2 to 5 according to the invention possess very good NO conversion activity at higher temperatures. It is also apparent that increasing the Ti/V ratio above a value of 0.20, in particular above 0.24 does not result in a higher activity, the activity is levelled out.

On the other hand, it is the general knowledge of a person skilled in the field of selective catalytic reduction of nitrogen oxides that the (unwanted) oxidation of SO₂ increases with an increasing Ti/V ratio (see, for example, Applied Catalysis b: Environmental 19 (1998) 103-117).

Accordingly, the present invention allows to gain an optimal NO conversion while restricting the unwanted SO₂ oxidation to a minimum.

### Particle size distribution

The particles obtained in Examples 2 to 5 were beadmilled for 8.75 h. Afterwards, the particles size (D50) was determined using laser diffraction analysis.

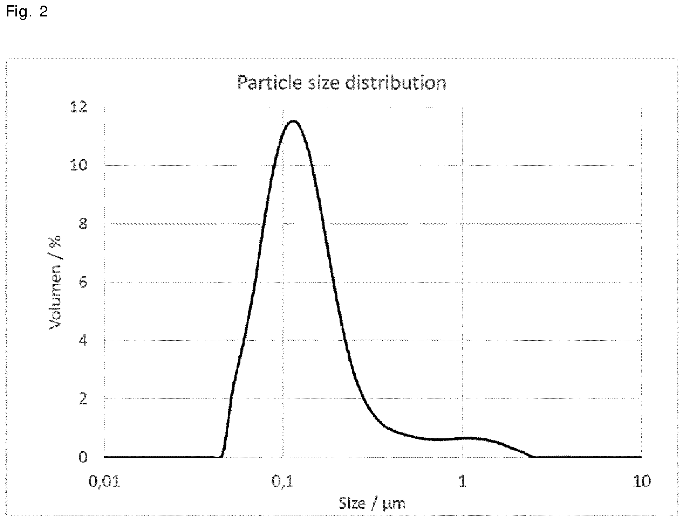

The results are shown in Fig. 2

## Claims

1. Catalyst for use in the selective catalytic reduction (SCR) of nitrogen oxides comprising
• a ceramic candle filter substrate and
• a coating which comprises an oxidic metal carrier comprising an oxide of titanium and a catalytic metal oxide which comprises an oxide of vanadium wherein the mass ratio vanadium/titanium is 0.03 to 0.27,
• wherein the mass ratio is calculated based on the mass of vanadium metal and titanium metal, and
• wherein the catalyst comprises from 1 to 20 % by weight of the catalytically active material, and
• wherein the catalytic metal oxide is adsorbed onto the surface of the oxidic metal carrier.

2. Catalyst according to claim 1, wherein the catalytic metal oxide of the coating which comprises an oxide of vanadium comprises vanadium pentoxide (V₂O₅).

3. Catalyst according to claim 2, wherein the catalytic metal oxide of the coating which comprises an oxide of vanadium comprises in addition an oxide of tungsten and/or molybdenum and/or antimony.

4. Catalyst according to any one of claims 1 to 3, wherein the oxidic metal carrier of the coating which comprises an oxide of titanium comprises titanium dioxide.

5. Catalyst according to claim 4, wherein the oxidic metal carrier of the coating which comprises an oxide of titanium comprises in addition an oxide of aluminum, cerium, zirconium or mixtures, mixed oxides or compounds comprising at least one of these oxides.

6. Catalyst according to any one of claims 1 to 5 wherein the oxidic metal carrier consists of either single or agglomerated nanoparticles of titanium dioxide with a primary particle size of between 1 and 1000 nm.

7. Catalyst according to any one of claims 1 to 6, wherein the mass ratio vanadium/titanium is 0.03 to 0.27, and wherein the mass ratio is calculated based on the mass of vanadium metal and titanium metal.

8. Catalyst according to any one of claims 1 to 7, which is free of platinum group metals.

9. Process for preparing a catalyst according to any one of claims 1 to 8 comprising the steps of
a) providing a ceramic candle filter substrate
b) providing an aqueous impregnation liquid comprising one or more catalyst metal precursor compounds comprising a vanadium compound dispersed on particles of an oxidic metal carrier comprising titanium oxide;
wherein the impregnation liquid is prepared by the steps of
i. adding the one or more catalyst metal precursor compounds and the oxidic metal carrier to water and continuously adding an acid to the thus obtained mixture to maintain the pH of the mixture at a value where the surface charge of the one or more catalyst precursor metal compound is negative and the Zeta potential of the oxidic metal carrier is positive;
ii. adsorbing the one or more catalyst metal precursor compound onto the surface of the oxidic metal carrier; and optionally
iii. adding the dispersing agent to the thus prepared mixture in an amount to obtain a pH value above 7 of the thus prepared washcoat slurry;
iv. optionally milling the mixture
c) impregnating the ceramic candle filter substrate with the resulting impregnation liquid; and
d) drying and thermally activating the impregnated ceramic candle filter substrate at a temperature 150 to 600°C to convert the one or more metal precursor compounds to their catalytically active form.

10. Process according to claim 9, wherein the catalyst metal precursor compound comprising a vanadium compound is ammonium metavanadate.

11. Process according to claim 9 and/or 10, wherein the aqueous impregnation liquid comprises a primary amine soluble in that liquid.

12. Process according to claim 11, wherein the primary amine is mono-ethyl amine.

13. Method for treating the off-gas from automotive and stationary sources and selectively reduce nitrogen oxides contained in said off-gas, wherein the off-gas is passed over a catalyst according to any one of claims 1 to 9.
